# EUROPEAN PATENT SPECIFICATION

(11) **EP 3 144 897 B1**
(45) Date of publication and mention of the grant of the patent: **01.01.2020**
(21) Application number: 16197248.4
(22) Date of filing: 18.03.2011
(51) Int. Cl.: G06T 15/04

(54) **DEMAND BASED TEXTURE RENDERING IN A TILE BASED RENDERING SYSTEM**
AUF ANFRAGE BASIERENDE TEXTURDARSTELLUNG IN EINEM RENDERINGSYSTEM AUF MOSAIKBASIS
RENDU DE TEXTURE BASÉ SUR LA DEMANDE DANS UN SYSTÈME DE RENDU PAR MOSAÏQUE

(30) Priority: 19.03.2010 GB 201004676
(43) Date of publication of application: 22.03.2017
(62) Divisional of application: 11716975.5
(73) Proprietor: Imagination Technologies Limited, Kings Langley, Hertfordshire WD4 8LZ (GB)
(72) Inventor: HOWSON, John William, St Albans, Hertfordshire AL2 2JD (GB)
(74) Representative: Slingsby Partners LLP

(56) References cited:
- US-A1- 2009 147 017
- CAPIN T ET AL: "The State of the Art in Mobile Graphics Research", IEEE COMPUTER GRAPHICS AND APPLICATIONS, IEEE SERVICE CENTER, NEW YORK, NY, US, vol. 28, no. 4, 1 July 2008 (2008-07-01), pages 74-84, XP011229506, ISSN: 0272-1716, DOI: DOI:10.1109/MCG.2008.83
- DANA COBZAS, KEITH YEREX AND MARTING JÄGERSAND: "Dynamic textures for image-based rendering of fine-scale 3D structure and animation of non-rigid motion", EUROGRAPHICS 2002, vol. 21, no. 3, 2002, - 2002, pages 493-502, XP002644684,

## Description

### Field of the Invention

This invention relates to a three-dimensional computer graphics rendering system in particular to methods and apparatus associated with rendering of textures in a tile based rendering system.

### Background to the Invention

Within real time computer graphics it is common to perform renders to surfaces which can then be used as textures in subsequent renders i.e. the rendered surface becomes a new texture or a "Dynamically Rendered" texture. For example in order to render a scene that includes reflections of the scene it is common to first render the scene to an environment texture map. This map is then used during the shading of objects to produce a reflection of the environment on the objects. This may be used, for example to show a reflection in a mirrored building.

In addition to environment mapping it is common for modern computer graphics applications to use a technique called shadow mapping. The shadow mapping technique renders the depth of objects from the perspective of light sources within the scene into texture maps. These texture maps are used during the subsequent rendering of objects to determine if each pixel is in shadow with respect to the light sources. This is done by comparing the depth of the object pixel being rendered to a depth that is stored at the equivalent location within a "shadow map" texture, for example if the depth of the object is greater than that in the shadow map then it is behind another object with respect to the light source and therefore the illuminating effect of the light source should not be applied during the rendering of that pixel. It is very common for textures associated with shadow maps to be very large e.g. 2048x2048 or greater, with larger texture sizes generally being required for higher quality rendering.

It should be noted that there are many variations on the above techniques and that the above two are included as examples and that the scope of the invention is not limited to these techniques.

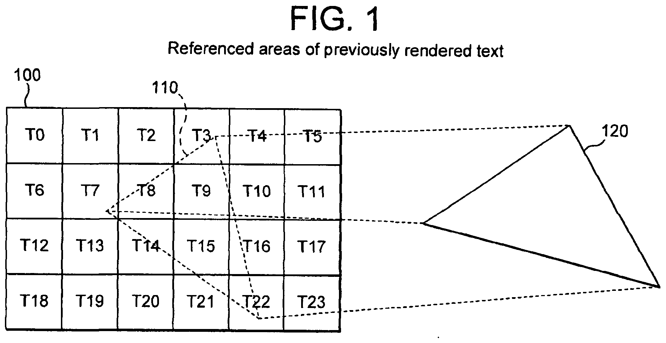

In modern graphics applications these renders to textures and the subsequent reads from them can use a significant percentage of the available memory bandwidth to render a scene at interactive frame rates. Furthermore it is not unusual for much of the data rendered into these textures to not be subsequently used. For example figure 1 illustrates a previously rendered texture 100 subdivided into regions T0 to T23 and a region 110 that maps a portion of the texture 100 into the triangle 120. As can be seen only tiles T3, T8, T9, T14 to T16, T21 and T22 of the previously rendered texture need to have been rasterised in order to satisfy the mapping of the texture to the triangle 120.

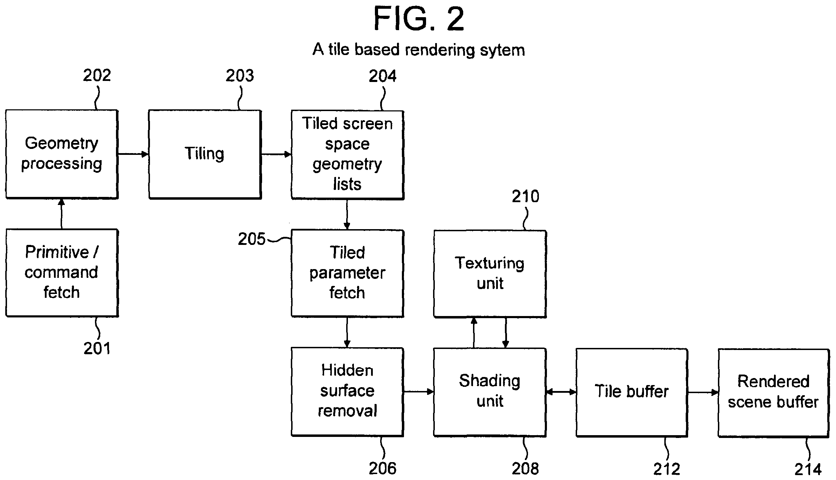

Tile based rendering systems are well-known. These subdivide an image into a plurality of rectangular blocks or tiles. The way in which this is done and the subsequent texturing and the shading performed is shown schematically in figure 2.

Firstly, a primitive/command fetch unit 201 retrieves command and primitive data from a memory and passes this to a geometry processing unit 202. This transforms the primitive and command data into screen space using well-known methods.

This data is then supplied to a tiling unit 203 which inserts object data from the screen space geometry into object lists for each one of a set of defined rectangular regions or tiles. An object list for each tile contains primitives that exist wholly or partially in that tile. The list exists for every tile on the screen, although some object lists may have no data in them. These object lists are fetched by a tile parameter fetch unit 205 which supplies them tile by tile to a hidden surface removal unit (HSR) 206 which removes surfaces which will not contribute to the final scene (usually because they are obscured by another surface). The HSR unit processes each primitive in the tile and passes only data for visible pixels to a shading unit 208.

The shading unit takes the data from the HSR and uses it to fetch textures using the texture unit 210 and applies shading to each pixel within a visible object using well-known techniques. The shading unit then feeds the textured and shaded data to an on chip tile buffer 212. As the data is temporarily stored in the on chip tile buffer external memory bandwidth associated with temporary storage eliminated.

Once each tile has been textured and shaded, the resultant data is written to an external scene buffer 214.

"The State of the Art in Mobile Graphics Research", by Capin T *et al.*, discusses the use of tiling architectures to reduce the memory traffic related to frame buffer accesses. It states that tiling the frame buffer so that a small tile is stored on the graphics chip provides many optimization and culling possibilities.

"Dynamic textures for image-based rendering of fine-scale 3D structure and animation of non-rigid motion", by Cobzas *et al*., relates to capturing real world scenes and then accurately rendering them for fine-scale 3D structure. It discusses texture blending and warping.

### Summary of the Invention

According to a first aspect of the present invention there is provided a method for shading and texturing computer graphic images in a tile based rendering system using dynamically rendered textures as claimed in claim 1.

According to a second aspect of the present invention there is provided an apparatus for shading and texturing computer graphic images in a tile based rendering system using dynamically rendered textures as claimed in claim 8.

Preferred embodiments of the present invention provide a method and apparatus that enable a tile based rendering system to rasterise and store rendered texture surfaces only where they are to be used by subsequent renders. This is accomplished in an embodiment of the invention by performing the tiling phase as described above for all texture surfaces but deferring the rasterisation phase of those dynamically rendered texture surfaces to the point at which they are referenced. As the rendering of the scene that uses the "demand based texture renders" (e,g, 100 from figure 1) potentially only references a small area of each texture within each tile the system can render one or more texture tiles at the point of reference into a small write back cache for immediate use within the main render. Due to the localised nature of the references it is highly likely that the rendered data will continue to reside within the cache subsystem for any tiles for which it is required, thereby substantially reducing the memory bandwidth associated with both the rendering of the textures and their subsequent use.

### Brief Description of the Drawings

Preferred embodiments of the invention will now be described in detail by way of example with reference to the accompanying drawings in which:
Figure 1 illustrates schematically how a small region of a previously rendered texture may be subsequently referenced for texturing an object;
Figure 2 shows a schematic diagram of a known tile based rendering system as discussed above;
Figure 3 illustrates the operation of demand based texture rendering embodying the invention;
Figure 4 illustrates the modifications to a tile based rendering system for demand based texture rendering in an embodiment of the invention; and
Figure 5 illustrates the modifications to the texture pipeline required to implement demand based texture rendering in an embodiment of the invention.

### Detailed Description of Preferred Embodiments

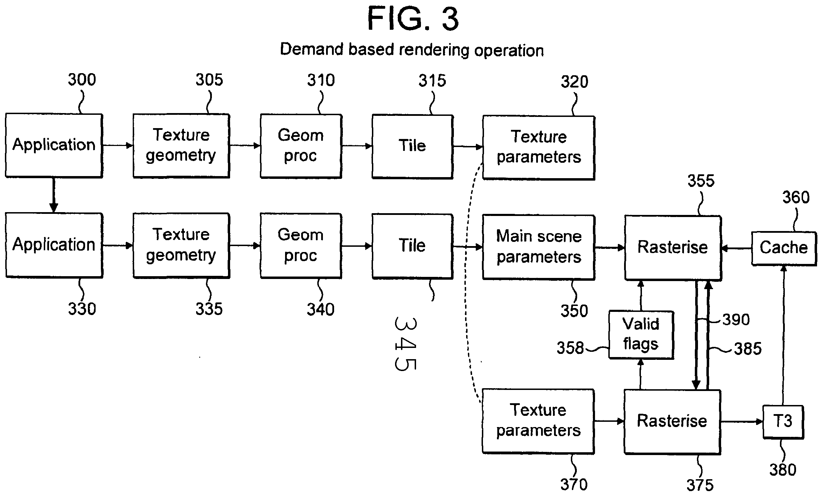

Figure 3 illustrates the operation of demand mode texture rasterisation in a tile based system. An application 300 first generates geometry 305 for an image which is to be rendered to a texture as in 100 in Figure 1. This geometry is processed at 310 using well known techniques to produce screen space geometry that is passed to a tiling unit 315 which generates tile screen space parameters 320 as described for a tile based rendering system. It should be noted that the current state of each tile within the texture i.e. if it has been rendered is indicated by a valid flags table 358. This table is generally stored within memory and contains a status flag for each tile that indicates if it has been rendered, all flags are initially cleared to indicate that no tiles have been rendered. Each time a tile is rendered a flag corresponding to that tile is set.

The application then switches to the rendering of a main scene at 330 by producing main scene geometry 335 which is then processed into screen space by geometry processor 340 and tiled at 345 to produce an object list for each tile. The resulting main scene parameters 350 are then rasterised a tile at a time at 355. During the rasterisation process the rasterisation hardware (not shown) detects areas of dynamic texture e.g. an environment map that are required but are not present in the texture store. These correspond to texturing of the type discussed with reference to figure 1 above. The rasteriser determines if each texture tile (as shown in Figure 1) has been rendered by reading the tile valid flags 358. When the rasterister determines that a texture tile has not yet been rendered the rasteriser switches from rasterising the main scene to rasterising parameters for the texture tiles required by the texture render 320 that are associated with the required region. The subsequent rasterisation process 375 produces texture image data for T3 380 (from figure 1) which is written to a cache 360. A corresponding valid flag for the texture tile is then set and the rasterisation hardware then switches back to rasterising the main scene 355 at 385. This process is repeated for all regions of the scene which are found to be required from the dynamic texture. For example from figure 1 regions T3, T8, T9, T14, T15, T16, T21 and T22. It should be noted that the remaining regions of the dynamic texture are not rasterised saving significant memory bandwidth and processing overhead.

It should be noted that the texture tile data written to the cache may either be written back to memory (not shown) or discarded when it is evicted from the cache 360. In the case where the data is discarded it may be re-created again in the future as described above if the tile (e.g. T3) is referenced again. This approach allows very large texture surfaces to be represented by the memory associated with the tiled geometry parameters only. Where texture data is discarded instead of being writtenback to memory the corresponding valid flags 358 are cleared to indicate that the texture is no longer present.

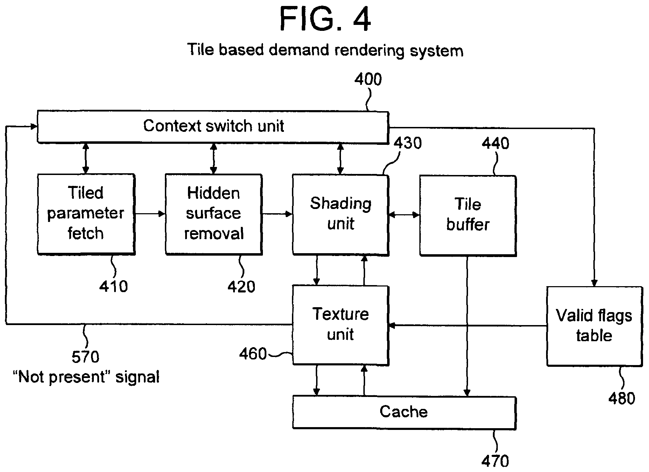

Figure 4 illustrates a system that implements tile based demand mode rendering of texture surfaces using dynamic textures as discussed above. It should be noted that the tiling/geometry processing units equivalent to these shown in figure 2 are not shown here. Tile parameter fetch unit 410 fetches the tiled parameter lists as per a normal tile based rendering system and passes the object data to the hidden surface removal unit (HSR) 420. This removes surfaces which will not contribute to the final scene (usually because they are obscured by another surface) using well known methods. The HSR unit processes each primitive in the tile and passes only data for surfaces visible at pixels to a shading unit 430.

The shading unit 430 takes the objects from the HSR unit 420 and applies shading and texturing to each pixel within each visible object using well-known techniques, these technique include issuing texture requests to a texture sampling unit (TSU) 460.

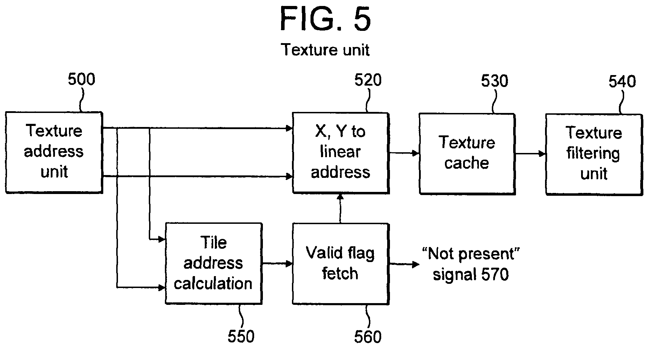

The TSU is illustrated in figure 5. The texture address unit 500 takes texture sample requests and calculates the X and Y address for each texture fetch using well known methods. The X and Y address is passed to the tile address calculation unit 550 which determines the address of the tile that the requested texture fetches will reside within. This calculation typically removes low order bits from the X and Y addresses to form a tile X and Y address, these values are then multiplied together and added to a base address to form the address of a "Tile valid flag" stored in the tile valid table (figure 4 480), which is stored in memory, it should be noted that other methods of address calculation could be used. The address of the valid flag is passed to the valid flag fetch unit 560 that retrieves the specified flag from valid flag table in memory. This flag is then emitted as the "Not present" signal 570. It should be noted that the valid flag fetch unit 560 could operate through a memory cache in order to improve its performance. The valid flag fetch unit also passes the valid flag to the address converter 520 which converts the X,Y address to a linear memory address using well known methods. If the valid flag indicates that a texture tile is not present then the address converter unit halts execution. If the valid flag indicates that a texture tile is present then the address converter unit passes the calculated texture address to the texture cache unit 530 which retrieves the texture data from either internal or external memory as necessary. The retrieved data is passed to the texture filtering unit 540 which filters the returned data using well known techniques, the resulting filtered data being passed back to the shading unit 430 in figure 4.

If the flag indicates that the texture tile hasn't already been rasterised the "not present" signal 570 is sent to the context switch unit (CSU) 400 in figure 4 indicating that it needs to switch to rasterising a tile of the texture that "missed" i.e. the texture was not available. This occurs for dynamically rendered textures, such as environment textures.

The CSU then instructs all units within the rasteriser to switch to rasterising the requested texture i.e. the missed texture tile. It should be noted that the CSU could rasterise a single missing tile or multiple tiles within the locality of the missing texture. The CSU 400 may be implemented as a hardware module, a separate programmable processor/micro controller or using a "Host" processor and device interrupts.

As the system rasterises each tile indicated by the CSU a buffer 440 outputs each completed texture tile to memory via a cache 470. This cache will typically use the well known caching type of "write back caching" so that the data resides locally within the cache when the tiles indicated by the CSU have been rasterised. The CSU then updates the tile valid flags 480 for the tiles that it has rasterised to indicate that they are now present. The cache will now store the dynamically mapped texture required for rasterisation of tiles which were flagged as requiring that texture.

On completion of the rasterisation process for the required tile(s) the CSU switches the rasterisation units back to processing the original render and allows the address converter 520 in figure 5 to proceed to issue the texture address to the cache unit as described above. As the texture tiles that were rasterised now sit locally within the cache any texture fetches for them now access the cache so reducing memory bandwidth associated with those fetches, i.e. dynamically mapped textures stored in the cache.

It should be noted that the cache could be replaced with a memory buffer that discards tiles rather than writing them back to memory when making space for new tile data. In these circumstances the discarded tiles that are references again will need to be rasterised again using the above process.

## Claims

1. A method for shading and texturing computer graphic images in a tile based rendering system using dynamically rendered textures comprising the steps of:
deriving screen space geometry for a texture to be dynamically rendered;
passing the screen space geometry for the texture to a tiling unit, to generate texture parameters for each of a plurality of texture tiles;
deriving screen space geometry for a scene that references the texture to be dynamically rendered;
passing the screen space geometry for the scene to the tiling unit, to generate an object list for each of a plurality of scene tiles; and
rendering a scene tile from the tiling unit using the object list, the rendering comprising:
issuing a texture request for the texture to be dynamically rendered to a texture sampling unit;
calculating, for the texture request, an X and Y address for texture fetch;
determining which texture tile of the plurality of texture tiles the texture fetch is within;
reading a corresponding valid flag for the texture tile from a table in memory to determine whether the texture tile has been rendered; and
switching to dynamically rendering texture data for the texture tile if the valid flag indicates that the texture tile has not been rendered.

2. A method according to claim 1, comprising writing the dynamically rendered texture data for the texture tile to a cache.

3. A method according to claim 2 comprising writing the dynamically rendered texture data for the texture tile to memory via the cache, optionally wherein the cache is a write-back cache.

4. A method according to claim 3, comprising switching back to rendering the scene tile after writing the dynamically rendered texture data to memory via the cache.

5. A method according to any preceding claim, comprising setting the corresponding valid flag for the texture tile when the texture tile has been rendered.

6. A method according to any preceding claim, wherein determining which texture tile the texture fetch is within comprises determining, using a tile address calculation unit, the address of the tile that the texture fetch is within based upon the X and Y address.

7. A method according to any preceding claim, wherein determining which texture tile the texture fetch is within comprises removing low order bits from the X and Y address to form a tile X and Y address, multiplying these values together and adding the result to a base address to form an address of the valid flag.

8. Apparatus for shading and texturing computer graphic images in a tile based rendering system using dynamically rendered textures comprising:
means for deriving screen space geometry for a texture to be dynamically rendered;
means for passing the screen space geometry for the texture to a tiling unit, to generate texture parameters for each of a plurality of texture tiles;
means for deriving screen space geometry for a scene that references the texture to be dynamically rendered;
means for passing the screen space geometry for the scene to the tiling unit, to generate an object list for each of a plurality of scene tiles; and
means for rendering a scene tile from the tiling unit using the object list, the rendering comprising:
issuing a texture request for the texture to be dynamically rendered to a texture sampling unit;
calculating, for the texture request, an X and Y address for texture fetch;
determining which texture tile of the plurality of texture tiles the texture fetch is within;
reading a corresponding valid flag for the texture tile from a table in memory to determine whether the texture tile has been rendered; and
switching to dynamically rendering texture data for the texture tile if the valid flag indicates that the texture tile has not been rendered.

9. An apparatus according to claim 8 comprising means for writing the dynamically rendered texture data for the texture tile to a cache.

10. An apparatus according to claim 9 comprising means for writing the dynamically rendered texture data for the texture tile to memory via the cache.

11. An apparatus according to claim 9 or 10, wherein the cache is a write-back cache.

12. An apparatus according to claim 10or claim 11, comprising switching back to rendering the scene tile after writing the dynamically rendered texture data to memory via the cache.

13. An apparatus according to any of claims 8 to 12, comprising setting the corresponding valid flag for the texture tile when the texture tile has been rendered.

14. An apparatus according to any of claims 8 to 13, wherein determining which texture tile the texture fetch is within comprises determining, using a tile address calculation unit, the address of the tile that the texture fetch is within based upon the X and Y address.

15. An apparatus according to any of claims 8 to 14, wherein determining which texture tile the texture fetch is within comprises removing low order bits from the X and Y address to form a tile X and Y address, multiplying these values together and adding the result to a base address to form an address of the valid flag.

## Patentansprüche

1. Verfahren zum Schattieren und Texturieren von Rechnergrafikbildern in einem kachelbasierten Rendersystem mittels dynamisch gerenderter Texturen, umfassend die folgenden Schritte:
Ableiten einer Bildschirmraumgeometrie für eine Textur, die dynamisch gerendert werden soll;
Weiterleiten der abgeleiteten Bildschirmraumgeometrie für die Textur an eine Kachelerstellungseinheit zur Erzeugung von Texturparametern für jede der Vielzahl von Texturkacheln;
Ableiten einer Bildschirmraumgeometrie für eine Szene, die auf die Textur verweist, die dynamisch gerendert werden soll;
Weiterleiten der Bildschirmraumgeometrie für die Szene an die Kachelerstellungseinheit zum Erzeugen einer Objektliste für jede der Vielzahl von Szenenkacheln; und
Rendern einer Szenenkachel von der Kachelerstellungseinheit mittels der Objektliste, das Rendern umfassend:
Ausgabe einer Texturanforderung für die dynamisch zu rendernde Textur an eine Texturabtasteinheit;
Berechnung, für die Texturanforderung, einer X- und Y-Adresse für den Texturabruf;
Bestimmung, in welche Texturkachel der Vielzahl von Texturkacheln der Texturabruf liegt;
Lesen eines entsprechenden gültigen Kennzeichners für die Texturkachel aus einer Tabelle im Speicher, um zu bestimmen, ob die Textukachel gerendert wurde; und
Umschaltung zum dynamischen Rendern von Texturdaten für die Texturkachel, falls der gültige Kennzeichner anzeigt, dass die Texturkachel nicht gerendert wurde.

2. Verfahren nach Anspruch 1, umfassend das Schreiben der dynamisch gerenderten Texturdaten für die Texturkachel in einen Zwischenspeicher.

3. Verfahren nach Anspruch 2, umfassend das Schreiben der dynamisch gerenderten Texturdaten für die Texturkachel über den Zwischenspeicher in den Speicher, wobei optional der Zwischenspeicher ein Rückschreib-Zwischenspeicher ist.

4. Verfahren nach Anspruch 3, umfassend das Zurückschalten zum Rendern der Szenenkachel nach dem Schreiben der dynamisch gerenderten Texturdaten über den Zwischenspeicher in einen Speicher.

5. Verfahren nach einem der vorhergehenden Ansprüche, umfassend das Setzen des entsprechenden gültigen Kennzeichners für die Texturkachel, nachdem die Texturkachel gerendert wurde.

6. Verfahren nach einem der vorhergehenden Ansprüche, wobei das Bestimmen, innerhalb welcher Texturkachel der Texturabruf liegt, das Bestimmen, mittels einer Kacheladressen-Berechnungseinheit, der Adresse der Kachel, innerhalb welcher der Texturabruf liegt, basierend auf der X- und Y-Adresse, umfasst.

7. Verfahren nach einem der vorhergehenden Ansprüche, wobei das Bestimmen, innerhalb welcher Texturkachel der Texturabruf liegt, das Entfernen niederwertiger Bits der X- und Y-Adresse umfasst, um eine Kachel-X- und -Y-Adresse zu bilden, das Miteinander-Multiplizieren dieser Werte und das Addieren des Ergebnisses zu einer Basisadresse, um eine Adresse des gültigen Kennzeichners zu bilden.

8. Vorrichtung für das Schattieren und Texturieren von Rechnergrafikbildern in einem kachelbasierten Rendersystem mittels dynamisch gerenderter Texturen, umfassend:
Mittel für das Ableiten einer Bildschirmraumgeometrie für eine Textur, die dynamisch zu rendern ist;
Mittel zum Weiterleiten der Bildschirmraumgeometrie für die Textur an eine Kachelerstellungseinheit zur Erzeugung von Texturparametern für jede der Vielzahl von Texturkacheln;
Mittel für das Ableiten einer Bildschirmraumgeometrie für eine Szene, die auf die Textur verweist, die dynamisch zu rendern ist;
Mittel für das Weiterleiten der Bildschirmraumgeometrie für die Szene an die Kachelerstellungseinheit zum Erzeugen einer Objektliste für jede der Vielzahl von Szenenkacheln; und
Mittel für das Rendern einer Szenenkachel von der Kachelerstellungseinheit mittels der Objektliste, das Rendern umfassend:
Ausgabe einer Texturanforderung für die dynamisch zu rendernde Textur an eine Texturabtasteinheit;
Berechnung, für die Texturanforderung, einer X- und Y-Adresse für den Texturabruf;
Bestimmung, in welche Texturkachel der Vielzahl von Texturkacheln der Texturabruf liegt;
Lesen eines entsprechenden gültigen Kennzeichners für die Texturkachel aus einer Tabelle im Speicher, um zu bestimmen, ob die Texturkachel gerendert wurde; und
Umschalten zum dynamischen Rendern von Texturdaten für die Texturkachel, falls der gültige Kennzeichner anzeigt, dass die Texturkachel nicht gerendert wurde.

9. Vorrichtung nach Anspruch 8, umfassend Mittel zum Schreiben der dynamisch gerenderten Texturdaten für die Texturkachel in einen Zwischenspeicher.

10. Vorrichtung nach Anspruch 9, umfassend Mittel zum Schreiben der dynamisch gerenderten Texturdaten für die Texturkachel über den Zwischenspeicher in den Speicher.

11. Vorrichtung nach Anspruch 9 oder 10, wobei der Zwischenspeicher ein Rückschreib-Zwischenspeicher ist.

12. Vorrichtung nach Anspruch 10 oder Anspruch 11, umfassend das Zurückschalten zum Rendern der Szenenkachel nach dem Schreiben der dynamisch gerenderten Texturdaten über den Zwischenspeicher in einen Speicher.

13. Vorrichtung nach einem der Ansprüche 8 bis 12, umfassend das Setzen des entsprechenden gültigen Kennzeichners für die Texturkachel, nachdem die Texturkachel gerendert wurde.

14. Vorrichtung nach einem der Ansprüche 8 bis 13, wobei das Bestimmen, innerhalb welcher Texturkachel der Texturabruf liegt, das Bestimmen, mittels einer Kacheladressen-Berechnungseinheit, der Adresse der Kachel, innerhalb welcher der Texturabruf liegt, basierend auf der X- und Y-Adresse, umfasst.

15. Vorrichtung nach einem der Ansprüche 8 bis 14, wobei das Bestimmen, innerhalb welcher Texturkachel der Texturabruf liegt, das Entfernen niederwertiger Bits der X- und Y-Adresse umfasst, um eine Kachel-X- und -Y-Adresse zu bilden, das Miteinander-Multiplizieren dieser Werte und das Addieren des Ergebnisses zu einer Basisadresse, um eine Adresse des gültigen Kennzeichners zu bilden.

## Revendications

1. Procédé pour l'ombrage et la texturation d'images graphiques informatisées dans un système de rendu à base de pavé utilisant des textures rendues dynamiquement comprenant les étapes de :
la dérivation d'une géométrie d'espace d'écran pour qu'une texture soit rendue dynamiquement ;
le passage de la géométrie d'espace d'écran pour la texture à une unité de pavage, pour générer des paramètres de texture pour chacun d'une pluralité de pavés de texture ;
la dérivation d'une géométrie d'espace d'écran pour une scène faisant référence à la texture devant être rendue dynamiquement ;
le passage de la géométrie d'espace d'écran pour la scène à l'unité de pavage, pour générer une liste d'objets pour chacun d'une pluralité de pavés de scène ; et
le rendu d'un pavé de scène à partir de l'unité de pavage à l'aide de la liste d'objets, le rendu comprenant :
l'émission d'une demande de texture pour que la texture soit rendue dynamiquement à une unité d'échantillonnage de texture ;
le calcul, pour la demande de texture, d'une adresse X et Y pour une récupération de textures ;
la détermination du pavé de texture de la pluralité de pavés de texture dans lequel la récupération de texture se trouve ;
la lecture d'un indicateur valide pour le pavé de texture à partir d'une table en mémoire afin de déterminer si le pavé de texture a été rendu ; et
la commutation de données de texture rendues dynamiquement pour le pavé de texture si l'indicateur valide indique que le pavé de texture n'a pas été rendu.

2. Procédé selon la revendication 1, comprenant l'écriture des données de texture rendue dynamiquement pour le pavé de texture vers un cache.

3. Procédé selon la revendication 2, comprenant l'écriture des données de texture rendue dynamiquement pour le pavé de texture vers une mémoire via le cache, facultativement dans lequel le cache est un cache à écriture différée.

4. Procédé selon la revendication 3, comprenant le retour au rendu du pavé de scène après l'écriture des données de texture rendues dynamiquement en mémoire via le cache.

5. Procédé selon l'une quelconque des revendications précédentes, comprenant le réglage de l'indicateur valide correspondant pour le pavé de texture lorsque le pavé de texture a été rendu.

6. Procédé selon l'une quelconque des revendications précédentes, dans lequel la détermination du pavé de texture dans lequel la récupération de texture se trouve comprend la détermination, à l'aide d'une unité de calcul d'adresse de pavé, de l'adresse du pavé dans lequel la recherche de texture se trouve sur base de l'adresse X et Y.

7. Procédé selon l'une quelconque des revendications précédentes, dans lequel la détermination du pavé de texture dans lequel la récupération de texture se trouve comprend la suppression des bits de commande faible de l'adresse X et Y pour former une adresse X et Y de pavé, en multipliant ces valeurs ensemble et en ajoutant le résultat à une adresse de base pour former une adresse de l'indicateur valide.

8. Appareil l'ombrage et la texturation d'images graphiques informatisées pour dans un système de rendu à base de pavé utilisant des textures rendues dynamiquement comprenant :
des moyens pour une dérivation d'une géométrie d'espace d'écran pour une texture devant être rendue dynamiquement ;
des moyens pour le passage de la géométrie d'espace d'écran pour la texture à une unité de pavage, pour générer des paramètres de texture pour chacun d'une pluralité de pavés de texture ;
des moyens pour la dérivation d'une géométrie d'espace d'écran pour une scène faisant référence à la texture devant être rendue dynamiquement ;
des moyens pour le passage de la géométrie d'espace d'écran pour la scène à l'unité de pavé, pour générer une liste d'objets pour chacun d'une pluralité de pavés de scène ; et
des moyens pour le rendu d'un pavé de scène à partir de l'unité de pavage à l'aide de la liste d'objets, le rendu comprenant :
l'émission d'une demande de texture pour que la texture soit rendue dynamiquement à une unité d'échantillonnage de texture ;
le calcul, pour la demande de texture, d'une adresse X et Y pour une récupération de textures ;
la détermination du pavé de texture de la pluralité de pavés de texture dans lequel la récupération de texture se trouve ;
la lecture d'un indicateur valide pour le pavé de texture à partir d'une table en mémoire afin de déterminer si le pavé de texture a été rendu ; et
la commutation de données de texture rendues dynamiquement pour le pavé de texture si l'indicateur valide indique que le pavé de texture n'a pas été rendu.

9. Appareil selon la revendication 8, comprenant des moyens pour l'écriture des données de texture rendue dynamiquement pour le pavé de texture vers un cache.

10. Appareil selon la revendication 9, comprenant des moyens pour l'écriture des données de texture rendue dynamiquement pour le pavé de texture vers une mémoire via le cache.

11. Appareil selon la revendication 9 ou 10, dans lequel le cache est un cache à écriture différée.

12. Appareil selon la revendication 10 ou la revendication 11, comprenant un le retour au rendu du pavé de scène après l'écriture des données de texture rendues dynamiquement en mémoire via le cache.

13. Appareil selon l'une quelconque des revendications 8 à 12, comprenant le réglage de l'indicateur valide correspondant pour le pavé de texture lorsque le pavé de texture a été rendu.

14. Appareil selon l'une quelconque des revendications 8 à 13, dans lequel la détermination du pavé de texture dans lequel la récupération de texture se trouve comprend la détermination, à l'aide d'une unité de calcul d'adresse de pavé, de l'adresse du pavé dans lequel la recherche de texture se trouve sur base de l'adresse X et Y.

15. Appareil selon l'une quelconque des revendications 8 à 14, dans lequel la détermination du pavé de texture dans lequel la récupération de texture se trouve comprend la suppression des bits de commande faible de l'adresse X et Y pour former une adresse X et Y de pavé, en multipliant ces valeurs ensemble et en ajoutant le résultat à une adresse de base pour former une adresse de l'indicateur valide.
